# EUROPÄISCHE PATENTSCHRIFT

(11) **EP 0 498 183 B1**
(45) Veröffentlichungstag und Bekanntmachung des Hinweises auf die Patenterteilung: **12.10.1994**
(21) Anmeldenummer: 92100648.2
(22) Anmeldetag: 16.01.1992
(51) Int. Cl.: B60C 9/22, B60C 9/20

(54) **Fahrzeugluftreifen und Verfahren zu seiner Herstellung**
Pneumatic tyres for vehicles and manufacturing process
Bandage pneumatique pour véhicules et procédé de fabrication

(30) Priorität: 02.02.1991 DE 4103232
(43) Veröffentlichungstag der Anmeldung: 12.08.1992
(73) Patentinhaber: Continental Aktiengesellschaft, 30165 Hannover (DE)
(72) Erfinder: Glinz, Michael, W-3057 Neustadt (DE)

(56) Entgegenhaltungen:
- EP-A- 0 319 588
- FR-A- 2 335 337
- FR-A- 2 369 925
- GB-A- 2 061 202
- LU-A- 87 789

## Beschreibung

Die Erfindung betrifft einen Fahrzeugluftreifen mit einer Radialkarkasse, die in den Wülsten durch Umschlingen zugfester Wulstkerne verankert ist, mit einem üblichen Verstärkungsgürtel und weiterhin mit einer durch Aufspulen von streifenförmigem Material erzeugten Bandage für den Gürtel, und ein Verfahren zu seiner Herstellung.

Es sind Fahrzeugluftreifen bekannt, bei denen eine aus einem streifenförmigen Cordmaterial gewickelte Gürtelabdeckbandage auf unterschiedliche Weise radial außem vom Gürtel aufgespult ist, z.B. durch Aneinanderstoßen benachbarter Windungen, zum Teil auch durch unterschiedliche überlappung benachbarter Windungen. Da in der Regel im Bereich der Gürtelränder eine strämmere oder stärkere Bandagenwirkung gewünscht wird als in der Mitte, hat man bei bekannten Reifen im Gürtelrandbereich die Spulbandage mit größeren überlappungen gewickelt oder mehr Schichten angeordnet als in der Gürtelmitte. Weiterhin ist es bereits bekannt, zwei gleich breite Streifen einer Gürtelbandage gleichzeitig zu wickeln.

Wenn man einen relativ schmalen Streifen für die Spulbandage verwendet, erhält man am Anfang der Bandage, der in der Regel an einem Gürtelrandbereich liegt, und am Umkehrpunkt am anderen Gürtelrand (für den Fall einer mehrschichtigen Bandage) je eine relativ kleine Störstelle, die aus einer ungleichförmigen Massenverteilung über den Gürtelumfang und einer ungleichförmigen Krafteinwirkung auf den Gürtel an diesen Stellen resultiert. Dafür erhält man bei der Verwendung eines schmalen Streifens den Nachteil einer erhöhten Taktzeit, weil eine größere Anzahl von Windungen zum Erstellen der vollständigen Abdecklage erforderlich ist. Umgekehrt verringert man bei der Verwendung eines breiteren Streifens für die Bandage die Taktzeit, vergrößert dafür aber die oben beschriebenen Störstellen an den Rändern des Gürtels.

Der Erfindung liegt deshalb die Aufgabe zugrunde, einen Fahrzeugluftreifen anzugeben, bei dem die Störstellen der Spulbandage im Randbereich des Gürtels möglichst klein gehalten werden, ohne daß sich dadurch die Taktzeit zur Herstellung der Spulbandage wesentlich erhöht.

Diese Aufgabe wird erfindungsgemäß bei einem Reifen der eingangs genannten Art dadurch gelöst, daß der Materialstreifen der Bandage im Randbereich des Gürtels schmaler ist als im weiter innen liegenden Bereich. Ein Verfahren zur Herstellung des Reifens ist dadurch gekennzeichnet, daß zumindest zwei Streifen unterschiedlicher Breite gespult werden und daß der schmalere bzw. schmalste Streifen in den axial äußeren Bereichen des Gürtels angeordnet wird.

Der Kerngedanke der Erfindung besteht darin, bei der Erzeugung einer Spulbandage im Randbereich des Gürtels einen schmaleren Streifen zu verwenden als im Mittenbereich. Hierdurch erzielt man den Vorteil, daß beim Aufbringen der Streifen unter gleicher Zugkraft die Spannung pro Faden und damit die Andrückkraft beim schmaleren Streifen im Randbereich des Gürtels größer ausfällt.

Nach einer bevorzugten Ausführung der Erfindung werden zur Erzeugung der Gürtelabdeckbandage die beiden Randbereiche des Gürtels mit einem schmalen Streifen aus Cordmaterial gewickelt, während im mittleren Bereich ein breiterer Streifen verwendet wird. Man kommt zu einem besonders günstigen Verfahren, wenn man die beiden Streifen unterschiedlicher Breite aus einem breiten Grundstreifen durch Auftrennung mittels eines Messers erzeugt und dabei eine Relativbewegung zwischen Messer und Grundstreifen in dem Sinne vorsieht, daß der schmalere Streifen mal auf der linken und mal auf der rechten Seite erzeugt wird. Durch dieses Vorgehen wird es möglich, gleichzeitig mit der Schaffung beider Streifen durch Auftrennen die beiden Streifen über den Gürtellagen aufzuwickeln, wobei man z.B. in einem ersten Schritt mit dem schmalen Streifen am linken Gürtelrand und mit dem breiten in der Gürtelmitte beginnt und beide Streifen nach rechts aufwickelt, danach durch Verstellen des Messers den schmalen Streifen in den breiten überführt und umgekehrt und nunmehr in einem zweiten Schritt die restlichen Teile des Gürtels durch Wicklung beider Streifen in Rechtsrichtung abdeckt.

Nach einer weiteren bevorzugten Ausführung der Erfindung werden zur Erzeugung der Gürtelabdecklage gleichzeitig Materialstreifen von drei Vorratsspulen abgezogen und gewickelt, wobei sich auf den beiden äußeren Spulen je ein schmaler Streifen und auf der mittleren ein breiterer befinden.

Bei den vorstehend beschriebenen Ausführungen ist es möglich, die Streifen so zu wickeln, daß benachbarte sich überlappen oder auch nicht.

Nachfolgend werden mehrere Ausführungsbeispiele der Erfindung anhand einer Zeichnung näher erläutert.

Es zeigt
- Fig. 1: einen Fahrzeugluftreifen mit einer gespulten Bandage in einem radialen Teilschnitt,
- Fig. 2: eine Wickeltrommel mit einer teilweise gewickelten Spulbandage (schematisch),
- Fig.3: die Wickeltrommel der Fig. 2 mit einer vervollständigten Spulbandage (schematisch),
- Fig. 4: eine Zuführvorrichtung mit einem Sensor zur Streifenbreitenmessung (schematisch),
- Fig. 5: die Zuführvorrichtung gemäß Fig. 4, jedoch mit einem Sensor zur Bestimmung der Messerposition (schematisch),
- Fig. 6: einen Materiallaufplan (schematisch),
- Fig. 7: eine Zuführvorrichtung mit drei Zuführrollen.

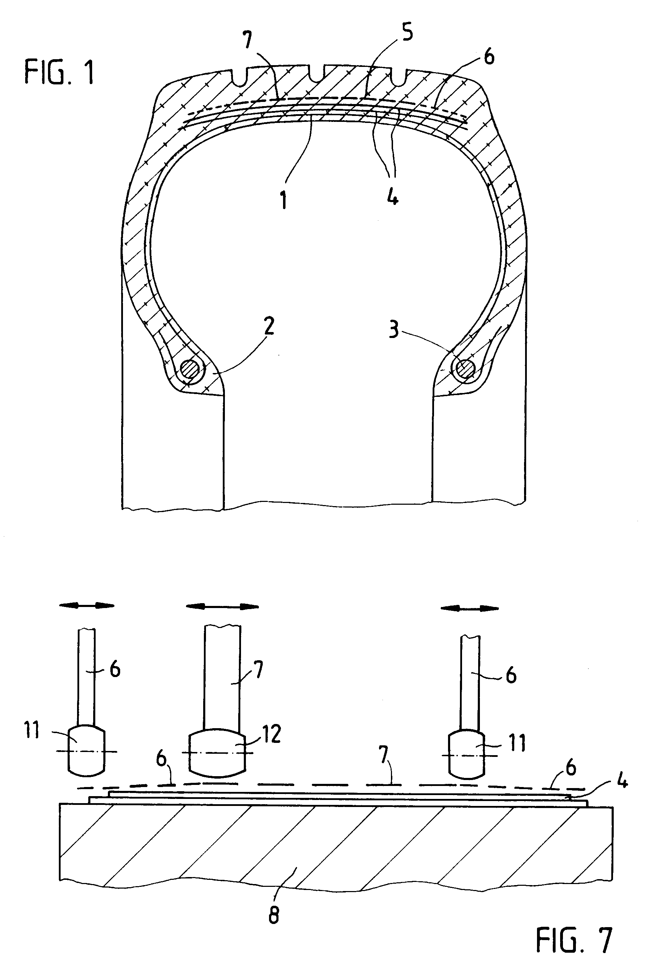

Fig. 1 zeigt einen Fahrzeugluftreifen mit einer Radialkarkasse 1, die in den Wülsten 2 durch Umschlingen von zugfesten Wulstkernen 3 verankert ist. Radial außen von der Radialkarkasse 1 befindet sich ein üblicher Verstärkungsgürtel 4, der vorliegend aus zwei Lagen besteht. Oberhalb vom Gürtel 4 ist eine Gürtelabdeckbandage 5 angeordnet, die den Gürtel 4 vollständig abdeckt und die als Spulbandage aus Cordstreifen unterschiedlicher Breite erzeugt ist. Dabei besteht die Bandage 5 im Bereich der beiden Gürtelränder aus je einem schmalen Cordmaterialstreifen 6, während im Bereich der Gürtelmitte ein breiterer Cordmaterialstreifen 7 gewickelt ist.

Der schmalere Cordstreifen 6 kann eine Streifenbreite von 4-8 mm aufweisen, während für den breiteren Streifen 7 Breiten von 12-20 mm geeignet sind. Das Cordmaterial kann aus gummierten Fäden z.B. aus Nylon oder Kevlar bestehen und weist eine Dichte von z.B. ca. 10 Fäden je 10 mm Streifenbreite auf. Der schmalere Streifen 6 im Bereich der Gürtelränder ist dort in zwei bis fünf Windungen gewickelt.

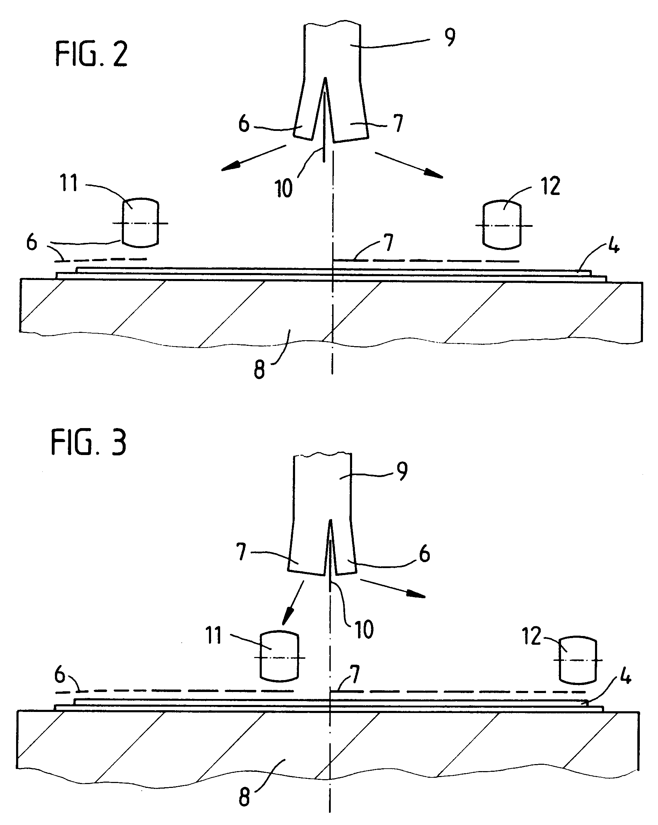

Anhand der Fig. 2 und 3 wird die Erzeugung des schmaleren Streifens 6 und des breiteren Streifens 7 sowie die Aufbringung der Bandage 5 auf ein Gürtelpaket verdeutlicht. In Fig. 2 befindet sich ein Gürtel 4 auf einer Gürteltrommel 8. Von einer nicht gezeichneten Vorratsspule wird ein Grundstreifen 9 abgezogen und dann an einem Messer 10 vorbeigeführt, das den Grundstreifen 9 in einen linken schmaleren Streifen 6 und in einen rechten breiteren Streifen 7 auftrennt. Der schmale Streifen 6 wird einer ersten Führungseinheit 11 zugeführt und gelangt von dort auf die Gürteltrommel 8. Entsprechend wird der breitere Streifen 7 einer zweiten Führungseinheit 12 und dann ebenfalls der Gürteltrommel 8 zugeführt.

Das Wickeln der Spulbandage erfolgt in der Weise, daß gleichzeitig mit dem Abziehen des Grundstreifens 9 und mit dem Auftrennen in einen schmalen linken Streifen 6 und einen breiten rechten Streifen 7 der Streifen 6 am linken Rand des Gürtels 4 beginnend in Rechtsrichtung gewickelt wird, während der Streifen 7 in der Gürtelmitte beginnend ebenfalls in Rechtsrichtung gewickelt wird. Im vorliegenden Beispiel werden beide Streifen 6, 7 in fünf Windungen auf die Gürteltrommel 8 aufgebracht. Danach erfolgt eine Umschaltung des Messers 10 in der Weise, daß nunmehr links der breite Streifen 7 und rechts der schmale Streifen 6 erzeugt wird. Der breite Streifen 7 wird über die erste Führungseinheit 11 in Fortsetzung des schmalen Streifens 6 aufgebracht, so daß der freie Bereich der linken Gürtelhälfte bis zur Gürtelmitte in weiteren fünf Windungen abgedeckt wird. Gleichzeitig wird über die zweite Führungseinheit 12 der rechte Randbereich des Gürtels 4 mit dem schmalen Streifen 6 in fünf weiteren Windungen abgedeckt. Nunmehr ist die Gürtelabdecklage 5 vollständig einschichtig aufgebracht. Für den Fall, daß man eine mehrschichtige Bandage 5 wünscht, werden die weiteren Schichten entsprechend in zwei Arbeitsschritten unter Umschaltung des Messers 10 aufgebracht. Die gewickelten Streifen können nebeneinander oder sich überlappend angeordnet sein.

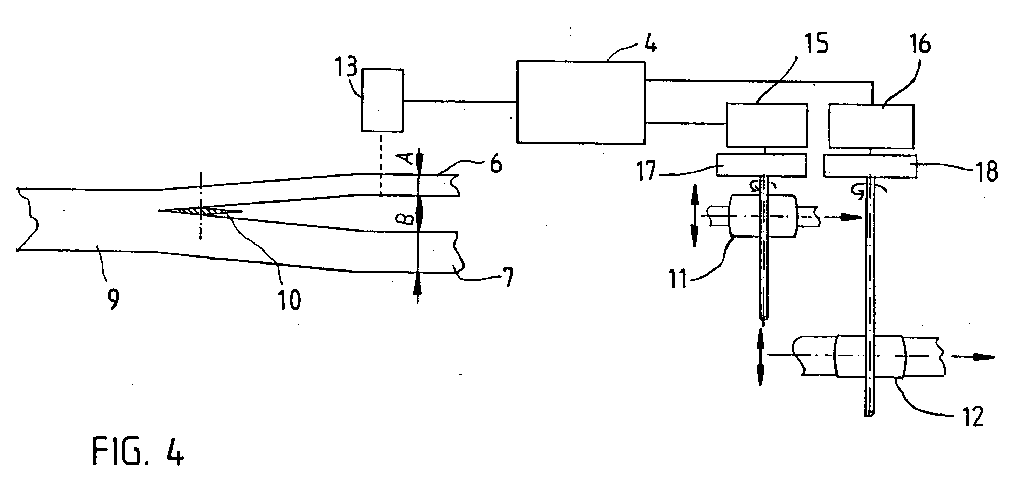

Fig. 4 zeigt eine erste Zuführvorrichtung in weiteren Einzelheiten. Man erkennt auf der linken Seite den breiten Grundstreifen 9, der von dem Messer 10 in einen schmalen Streifen 6 und einen breiten Streifen 7 aufgetrennt wird. Die Breitenmessung des Streifens 6 erfolgt über einen Sensor 13 z.B. optisch, wobei mit Hilfe des Meßsignals in einer Steuerungseinheit 14 Steuersignale für Motoren 15 und 16 erzeugt werden, die unter anderem die Vorschubgeschwindigkeit steuern. Die Motoren 15 und 16 treiben über Getriebe 17, 18 die erste Führungseinheit 11 und die zweite Führungseinheit 12 an. Gleichfalls wird für einen motorgetriebenen Vorschub der Führungseinheiten 11 und 12 gesorgt, wobei die zweite Führungseinheit 12 mit dem breiteren Streifen 7 selbstverständlich eine gegenüber der ersten Führungseinheit 11 größere Vorschubgeschwindigkeit aufweist.

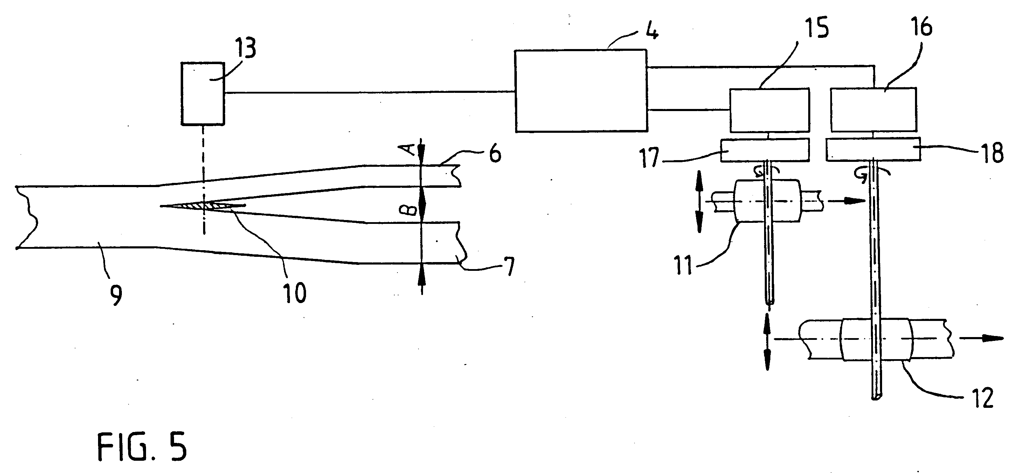

Die in Fig. 5 dargestellte Zuführeinrichtung entspricht im wesentlichen der vorstehend beschriebenen, jedoch mit dem Unterschied, daß der Sensor 13 nunmehr nicht die Breite eines Streifens erfaßt, sondern vielmehr die Position des Messers 10.

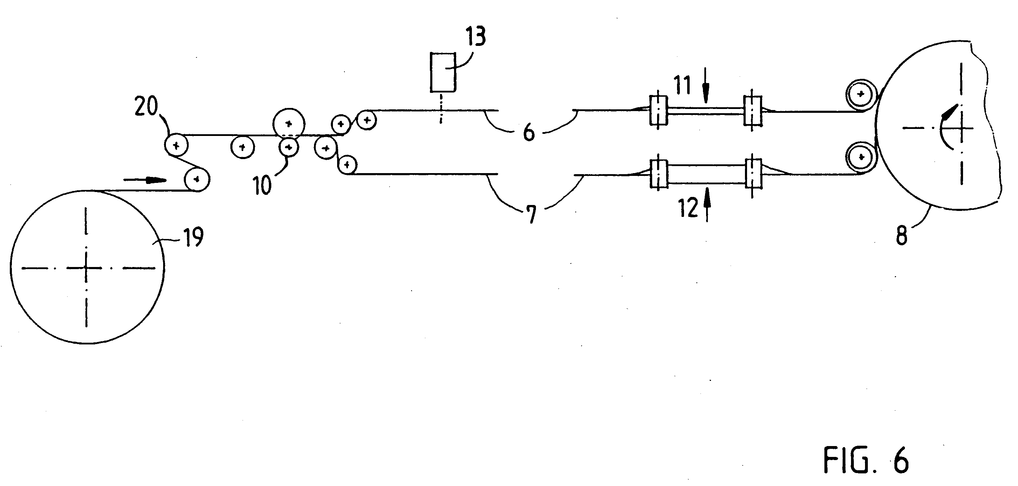

In Fig. 6 ist der Materiallaufplan dargestellt. Das Grundmaterial 9 gelangt von einer Vorratsspule 19 über verschiedene Umlenkrollen 20 zum Messer 10, wo die Auftrennung in einen schmalen Streifen 6 und einen breiten Streifen 7 erfolgt. Die Abtastung geschieht durch den Sensor 13 entsprechend dem Beispiel der Fig. 4. über die Führungseinheiten 11, 12 gelangen die Streifen 6, 7 auf die Wickeltrommel 8.

Im Beispiel der Fig. 7 werden drei einzelne Materialstreifen 6, 7 von drei separaten, nicht gezeichneten Vorratsspulen abgezogen und drei Führungseinheiten 11, 12 zugeführt, wobei links und rechts je ein schmaler Streifen 6 einer ersten Führungseinheit 11 zugeführt wird, während in der Mitte ein breiter Streifen 7 der zweiten Führungseinheit 12 zugeführt wird. Die Führungseinheiten 11 und 12 sind in der Weise relativ zur Gürteltrommel 8 angeordnet, daß durch gleichzeitiges Abziehen und Aufbringen der Materialstreifen 6 und 7 die Bandage 5 erzeugt wird, wobei die schmalen Streifen 6 im Bereich der beiden Gürtelränder aufgebracht werden, während der breitere Streifen 7 den mittleren Bereich des Gürtels 4 bedeckt. Alle drei Streifen werden in gleicher Wickelrichtung auf den Gürtel 4 aufgebracht, wobei selbstverständlich die zweite Führungseinheit 12 mit dem breiteren Streifen 7 eine größere Vorschubgeschwindigkeit aufweist als die beiden Führungseinheiten 11.

Mit der Erfindung ist es selbstverständlich auch möglich, anstelle von zwei diskret eingestellten Streifenbreiten eine kontinuierliche Änderung der Streifenbreite vorzusehen, so daß ein Abdeckstreifen der Bandage 5 im Randbereich des Gürtels 4 seine niedrigste Breite aufweist und die Breite dann bis zur Gürtelmitte hin kontinuierlich ansteigt.

## Patentansprüche

1. Fahrzeugluftreifen mit einer Radialkarkasse, die in den Wülsten durch Umschlingen zugfester Wulstkerne verankert ist, mit einem üblichen Verstärkungsgürtel und weiterhin mit einer durch Aufspulen von streifenförmigem Material erzeugten Bandage für den Gürtel, **dadurch gekennzeichnet,** daß der Materialstreifen (6, 7) der Bandage (5) im Randbereich des Gürtels (4) schmaler ist als im weiter innen liegenden Bereich.

2. Reifen nach Anspruch 1, dadurch gekennzeichnet, daß die Spulbandage (5) aus zwei Streifen (6, 7) unterschiedlicher Breite erzeugt ist, wobei der schmalere Streifen (6) jeden der beiden Randbereiche des Gürtels (4) in mehreren Windungen abdeckt, während der breitere Streifen (7) im sich axial innen anschließenden Bereich gewickelt ist.

3. Reifen nach Anspruch 1 oder 2, dadurch gekennzeichnet, daß der schmalere Bandagenstreifen (6) 4-8 mm breit ist und in je 2 bis 5 nebeneinanderliegenden oder sich überlappenden Windungen die Randbereiche des Gürtels (4) abdeckt und daß der breitere Streifen (7) im axial inneren Bereich des Gürtels 20 bis 25 mm breit ist.

4. Reifen nach Anspruch 1, dadurch gekennzeichnet, daß die Streifenbreite der Spulbandage (5) kontinuierlich vom Gürtelrand nach axial innen hin abnimmt.

5. Verfahren zum Herstellen von Fahrzeugluftreifen nach Anspruch 1, bei dem zur Erzeugung einer ein- oder mehrschichtigen Gürtelabdecklage zumindest zwei Cordstreifen gleichzeitig oberhalb des Gürtels in im wesentlichen nebeneinander liegenden Windungen aufgespult werden, dadurch gekennzeichnet, daß zumindest zwei Streifen unterschiedlicher Breite gespult werden und daß der schmalere bzw. schmalste Streifen in den axial äußeren Bereichen des Gürtels angeordnet wird.

6. Verfahren nach Anspruch 5, dadurch gekennzeichnet, daß die Erzeugung der unterschiedlichen Streifenbreiten durch Auftrennung eines breiten Grundstreifens mittels eines oder zweier Messer erfolgt.

7. Verfahren nach Anspruch 5 oder 6, dadurch gekennzeichnet, daß im Falle von zwei Streifen der schmalere und der breitere aus dem Grundstreifen wechselseitig durch axiales Verschieben eines einzelnen Messers oder des Grundstreifens erzeugt werden.

8. Verfahren nach Anspruch 7, dadurch gekennzeichnet, daß gleichzeitig mit dem Auftrennen des Grundstreifens der schmale und der breite Streifen abgezogen und in gleicher Wickelrichtung auf die Gürtellagen aufgewickelt werden, daß in einem ersten Schritt das Wickeln des schmalen Streifens von einem Gürtelrand aus und das des breiten von der Gürtelmitte aus erfolgt, daß nach dem Verschieben des Messers oder des Grundstreifens aus dem schmalen Streifen der breite wird und umgekehrt und daß in einem zweiten Schritt die restlichen Teile der Gürtelabdeckbandage gewickelt werden.

9. Verfahren nach Anspruch 5, dadurch gekennzeichnet, daß zur Erzeugung einer Gürtelabdecklage gleichzeitig drei Materialstreifen von drei Vorratsspulen abgezogen und gewickelt werden, wobei sich auf den beiden äußeren Spulen je ein schmaler Streifen und auf der mittleren ein breiterer befinden.

## Claims

1. Pneumatic vehicle tyre, having a radial carcase, which is secured in the beads by being looped around substantially inextensible bead cores, a conventional reinforcing belt and also a bandage for the belt, which bandage is produced by winding strip-like material over said belt, characterised in that the material strip (6, 7) of the bandage (5) is narrower in the edge region of the belt (4) than in the region situated further internally.

2. Tyre according to claim 1, characterised in that the wound bandage is produced from two strips (6, 7) of different widths, the narrower strip (6) covering each of the two edge regions of the belt (4) in a plurality of windings/coils, while the wider strip (7) is wound in the axially internally communicating region.

3. Tyre according to claim 1 or 2, characterised in that the narrower bandage strip (6) is 4-8 mm wide and covers the edge regions of the belt (4) with every 2 to 5 adjacent or overlapping windings, and in that the wider strip (7) is 20 to 25 mm wide in the axially internal region of the belt.

4. Tyre according to claim 1, characterised in that the strip width of the wound bandage (5) continuously decreases axially inwardly from the belt edge.

5. Method of producing pneumatic vehicle tyres according to claim 1, wherein, in order to produce a single- or multi-layered belt cover ply, at least two cord strips are simultaneously wound over the belt in windings situated substantially adjacent one another, characterised in that at least two strips of variable width are wound, and in that the narrower, or respectively the narrowest, strip is disposed in the axially external regions of the belt.

6. Method according to claim 5, characterised in that the different strip widths are produced by severing a wide basic strip by means of one or two cutters.

7. Method according to claim 5 or 6, characterised in that, in the case where two strips are present, the narrower strip and the wider strip are produced alternately from the basic strip by axial displacement of an individual cutter or of the basic strip.

8. Method according to claim 7, characterised in that, simultaneously with the severing of the basic strip, the narrow strip and the wide strip are withdrawn and wound onto the belt plies in the same direction of winding, in that, in a first step, the narrow strip is wound from one edge of the belt, and the wide strip is wound from the centre of the belt, in that the wide strip is wound after the displacement of the cutter or the basic strip from the narrow strip, and vice versa, and in that the remaining portions of the belt cover bandage are wound in a second step.

9. Method according to claim 5, characterised in that, in order to produce a belt cover ply, three material strips are simultaneously withdrawn and wound from three supply reels, a narrow strip being situated on the two external reels and a wider strip being situated on the central reel.

## Revendications

1. Pneumatiques de véhicule comportant une carcasse radiale, qui est ancrée dans les talons par enveloppement de tringles résistantes à la traction, et comportant une ceinture usuelle de renforcement et en outre un bandage formé par enroulement d'un matériau en forme de bande, pour la ceinture, caractérisés en ce que la bande de matériau (6,7) du bandage (5) est plus étroite dans la zone marginale de la ceinture (4) que dans la zone située plus à l'intérieur.

2. Pneumatiques selon la revendication 1, caractérisés en ce que le bandage d'enveloppement (5) est formé de deux bandes (6,7) possédant des largeurs différentes, la bande la plus étroite (6) recouvrant chacune des deux zones marginales de la ceinture (4), sous la forme de plusieurs spires, tandis que la bande la plus large (7) est enroulée dans la zone qui se raccorde sur le côté intérieur du point de vue axial.

3. Pneumatiques selon la revendication 1 ou 2, caractérisés en ce que la bande la plus étroite (6) du bandage possède une largeur de 4-8 mm et recouvre les parties marginales de la ceinture (4) respectivement au moyen de 2 à 5 spires disposées côte-à-côte ou qui se chevauchent, et que la bande la plus large (7) possède une largeur de 20 à 25 mm dans la zone, intérieure du point de vue axial, de la ceinture.

4. Pneumatiques selon la revendication 1, caractérisés en ce que la largeur de bande du bandage enveloppant (5) diminue continûment vers l'intérieur du point de vue axial, à partir du bord de la ceinture.

5. Procédé pour fabriquer des pneumatiques pour véhicule selon la revendication 1, selon lequel, pour réaliser une couche de recouvrement de la ceinture sur plusieurs couches, au moins deux bandes de câblés sont enroulées simultanément au-dessus de la ceinture selon des spires disposées sensiblement côte-à-côte, caractérisé en ce qu'on enroule au moins deux bandes possédant des largeurs différentes et qu'on dispose la bande plus étroite ou la plus étroite dans les zones, extérieures du point de vue axial, de la ceinture.

6. Procédé selon la revendication 5, caractérisé en ce que l'obtention des différentes largeurs de bande est obtenue par division d'une bande de base large à l'aide d'un ou de deux couteaux.

7. Procédé selon la revendication 5 ou 6, caractérisé en ce que dans le cas de deux bandes, la bande la plus étroite et la bande la plus large sont formées à partir de la bande de base alternativement par déplacement axial d'un couteau unique ou de la bande de base.

8. Procédé selon la revendication 7, caractérisé en ce qu'on retire la bande étroite et la bande large en même temps que s'effectue le découpage de la bande de base et qu'on les enroule avec le même sens d'enroulement sur les couches de ceinture, que, lors d'une première étape, l'enroulement de la bande étroite s'effectue à partir d'un bord de la ceinture et l'enroulement de la bande large s'effectue à partir du centre de la ceinture, qu'après le déplacement du couteau ou de la bande de base, on passe de la bande étroite à la bande large et inversement et que, lors d'une seconde étape, on enroule les parties restantes du bandage de recouvrement de la ceinture.

9. Procédé selon la revendication 5, caractérisé en ce que pour former une couche de revêtement de ceinture, on tire simultanément trois bandes de matériau de trois bobines débitrices et on les enroule, une bande étroite étant située sur chacune des deux bobines extérieures tandis qu'une bande plus large est située sur la bobine médiane.
